(19) Europäisches Patentamt
European Patent Office
Office européen des brevets

(11) **EP 3 687 700 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **18778868.2**

(22) Anmeldetag: **20.09.2018**

(51) Internationale Patentklassifikation (IPC):
**B05B 1/30** *(2006.01)*     **B05B 1/14** *(2006.01)*

(52) Gemeinsame Patentklassifikation (CPC):
**B05B 1/3053; B41J 2/04; B41J 2/14201; B41J 2/16; B41J 2/1607; B41J 2/1642;** B41J 2002/041; B41J 2202/05

(86) Internationale Anmeldenummer:
**PCT/EP2018/075504**

(87) Internationale Veröffentlichungsnummer:
**WO 2019/063417 (04.04.2019 Gazette 2019/14)**

(54) **APPLIKATOR MIT GERINGEM DÜSENABSTAND**

APPLICATOR WITH REDUCED NOZZLE INTERVAL

APPLICATEUR À INTERVAL DE BUSES RÉDUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2017 DE 102017122493**

(43) Veröffentlichungstag der Anmeldung:
**05.08.2020 Patentblatt 2020/32**

(73) Patentinhaber: **Dürr Systems AG**
**74321 Bietigheim-Bissingen (DE)**

(72) Erfinder:
• **FRITZ, Hans-Georg**
**73760 Ostfildern (DE)**
• **WÖHR, Benjamin**
**74363 Eibensbach/Güglingen (DE)**
• **KLEINER, Marcus**
**74354 Besigheim (DE)**
• **BUBEK, Moritz**
**71640 Ludwigsburg (DE)**
• **BEYL, Timo**
**74354 Besigheim (DE)**
• **HERRE, Frank**
**71739 Oberriexingen (DE)**
• **SOTZNY, Steffen**
**71720 Oberstenfeld (DE)**
• **TANDLER, Daniel**
**70469 Stuttgart (DE)**
• **BERNDT, Tobias**
**71254 Ditzingen (DE)**

(74) Vertreter: **v. Bezold & Partner Patentanwälte - PartG mbB**
**Ridlerstraße 57**
**80339 München (DE)**

(56) Entgegenhaltungen:
EP-A1- 0 276 053     WO-A1-2012/072576
WO-A2-2007/056098     DE-A1- 3 506 393
DE-A1- 3 634 137     US-A- 2 296 079
US-A- 4 157 149     US-A- 5 800 614

**Beschreibung**

Die Erfindung betrifft einen Applikator (z.B. einen Druckkopf) zur Applikation eines Beschichtungsmittels (z.B. Lack) auf ein Bauteil (z.B. Kraftfahrzeugkarosseriebauteil).

Aus dem Stand der Technik (z.B. US 9 108 424 B2) sind sogenannte Drop-on-Demand-Druckköpfe bekannt, die einen Tröpfchenstrahl oder einen kontinuierlichen Beschichtungsmittelstrahl ausgeben, wobei das Wirkprinzip dieser bekannten Drop-on-Demand-Druckköpfe auf der Verwendung von elektromagnetischen Ventilen beruht. Dabei wird ein magnetisch angetriebener Kolben in einer Spule geführt und bewegt eine Ventilnadel, die in Abhängigkeit von der Bestromung der Spule verschoben wird und eine Düse wahlweise freigibt oder verschließt.

Derartige Druckköpfe werden auch in der WO 2012/058373 A2 beschrieben. Diese bekannten Druckköpfe arbeiten ebenfalls mit Ventilkolben, die durch elektrische Aktoren bewegt werden, wobei die Ventilkolben in einem Führungsrohr (Spuleninnenrohr) in der Spule verlaufen.

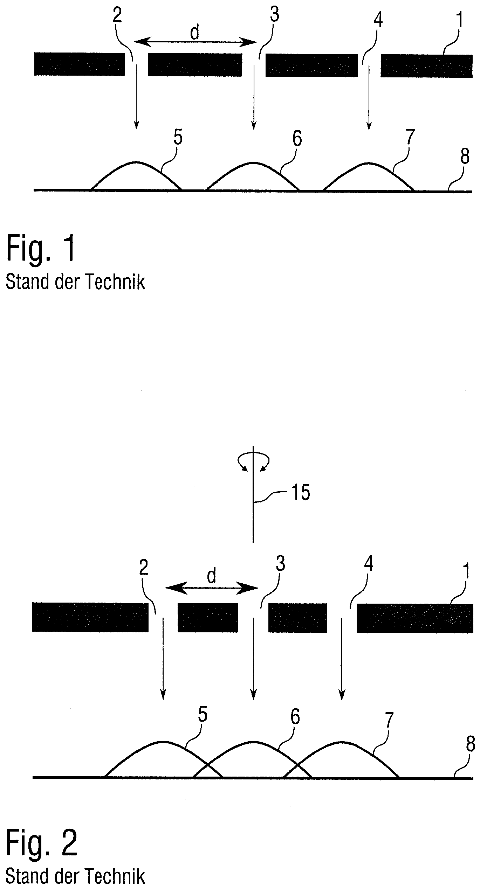

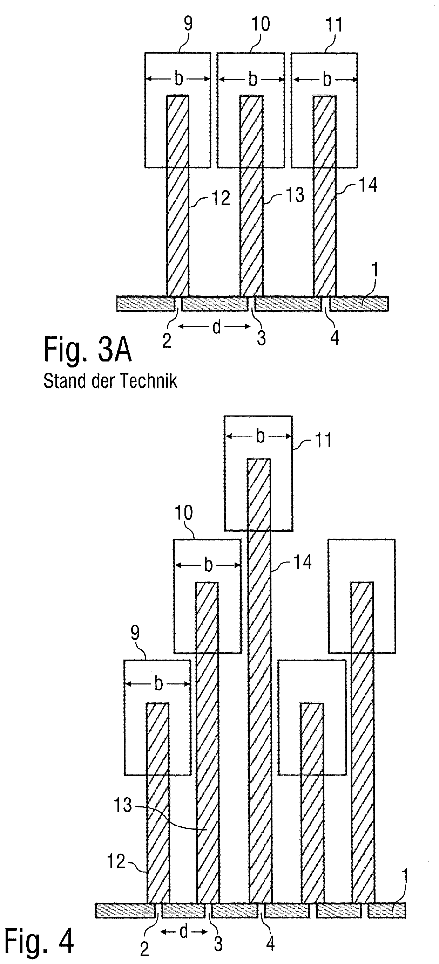

Problematisch bei den bekannten Drop-on-Demand-Druckköpfen ist der Düsenabstand zwischen den benachbarten Düsen, wie nachfolgend unter Bezugnahme auf die Figuren 1, 2, 3A und 3B beschrieben wird. So weisen die bekannten Drop-on-Demand-Druckköpfe üblicherweise eine Düsenplatte 1 mit zahlreichen Düsen 2, 3, 4 auf, wobei durch die Düsen 2-4 Tröpfchen 5, 6, 7 auf ein Bauteil 8 abgegeben werden. Die Düsen 5-7 sind hierbei in einer linearen Düsenreihe in der Düsenplatte 1 angeordnet. Darüber hinaus weisen die bekannten Drop-on-Demand-Druckköpfe zum Öffnen bzw. Verschließen der Düsen 2-4 Aktoren 9-11 auf, die beispielsweise als elektromagnetische Aktoren ausgebildet sein können und jeweils eine Aktornadel 12-14 verschieben. In der in Figur 3A gezeigten Stellung der Aktornadeln 12-14 verschließen die Aktornadeln 12-14 die Düsen 2-4, so dass kein Beschichtungsmittel durch die Düsen 2-4 abgegeben wird. Die Düsen 2-4 sind hierbei in einem bestimmten Düsenabstand d entlang der Düsenreihe angeordnet, während die Aktoren 9-11 eine bestimmte Breite b entlang der Düsenreihe aufweisen. Dies bedeutet, dass der Düsenabstand d zwischen den benachbarten Düsen 2-4 nicht kleiner werden kann als die Breite b der Aktoren 9-11, da sonst der zur Verfügung stehende Bauraum entlang der Düsenreihe für die Aktoren 9-11 nicht ausreichen würde.

Bei der Darstellung gemäß Figur 1 sind die Tröpfchen 5-7 auf dem Bauteil 8 deshalb so weit voneinander entfernt, dass die Tröpfchen 5-7 nicht zu einem durchgehenden Beschichtungsmittelfilm auf dem Bauteil 8 führen, was inakzeptabel ist.

Im Betrieb werden die bekannten Drop-on-Demand-Druckköpfe deshalb um eine Drehachse 15 rechtwinklig zur Oberfläche des Bauteils 8 und rechtwinklig zu der senkrecht zur Zeichenebene verlaufenden Lackierbahn gedreht. Dies hat zur Folge, dass der Düsenabstand d in der Zeichenebene, d.h. rechtwinklig zur Lackierbahn verringert wird. Diese Verdrehung des Drop-on-Demand-Druckkopfs ermöglicht es, dass die Tröpfchen 5-7 auf der Oberfläche des Bauteils 8 so nah zusammenliegen, dass sie nach dem Auftragen zu einem durchgehenden Beschichtungsmittelfilm verlaufen, wie in Figur 2 dargestellt ist. Die Drehung des Drop-on-Demand-Düsenkopfs ermöglicht also eine Lösung des Problems, dass der minimale Düsenabstand d durch die Breite b der Aktoren 9-11 nach unten begrenzt ist. Allerdings wäre es wünschenswert, auf eine solche Drehung verzichten zu können. Insbesondere wäre es wünschenswert, den Düsenabstand in einem Druckkopf zu verringern.

Zum allgemeinen technischen Hintergrund der Erfindung ist auch hinzuweisen auf DE 33 02 617 A1, US 2013/0127955 A1, EP 0 426 473 A2, US 2005/0046673 A1, EP 1 862 311 A1, US 2015/0360472 A1, US 4 157 149 A, WO 2012/072576 A1, US 2 296 079 A, DE 35 06 393 A1, US 5 800 614 A, EP 0 276 053 A1, WO 2007/056098 A2 und WO 2010/046064 A1.

Schließlich offenbart DE 36 34 137 A1 einen Druckkopf gemäß dem Oberbegriff von Anspruch 1. Dieser bekannte Druckkopf ist jedoch noch nicht vollständig befriedigend.

Der Erfindung liegt deshalb die Aufgabe zugrunde, einen entsprechend verbesserten Applikator (z.B. Druckkopf) zu schaffen.

Diese Aufgabe wird durch einen erfindungsgemäßen Applikator (z.B. Druckkopf) gemäß dem Hauptanspruch gelöst.

Der erfindungsgemäße Applikator (z.B. Druckkopf) eignet sich allgemein zur Applikation eines Beschichtungsmittels. Die Erfindung ist also hinsichtlich des Typs des zu applizierenden Beschichtungsmittels nicht auf ein bestimmtes Beschichtungsmittel beschränkt. Vorzugsweise ist der Druckkopf jedoch zur Applikation eines Lacks ausgelegt. Alternativ besteht jedoch im Rahmen der Erfindung auch die Möglichkeit, dass es sich bei dem Beschichtungsmittel um einen Klebstoff oder um ein Dichtungsmaterial handelt, beispielsweise zur Nahtabdichtung ("Sealing") bei Kraftfahrzeugkarosseriebauteilen. Der erfindungsgemäße Applikator kann also auch als Klebstoff-Applikator oder als Dichtungsmaterial-Applikator ausgebildet sein.

Weiterhin ist zu erwähnen, dass der erfindungsgemäße Applikator (z.B. Druckkopf) allgemein geeignet ist, um das Beschichtungsmittel (z.B. Lack) auf ein bestimmtes Bauteil zu applizieren. Hinsichtlich des Typs des zu beschichtenden Bauteils ist die Erfindung ebenfalls nicht beschränkt. Vorzugsweise ist der erfindungsgemäße Druckkopf jedoch dazu ausgelegt, ein Beschichtungsmittel (z.B. Lack) auf ein Kraftfahrzeugkarosseriebauteil oder ein Anbauteil eines Kraftfahrzeugkarosseriebauteils zu applizieren.

Der erfindungsgemäße Applikator (z.B. Druckkopf) weist zunächst in Übereinstimmung mit dem Stand der Technik eine Düsenreihe mit mehreren Düsen auf, um das Beschichtungsmittel jeweils in Form eines Strahls zu applizieren, wobei die Düsen entlang der Düsenreihe in einer gemeinsamen Düsenebene angeordnet sind.

Hierbei ist zu erwähnen, dass der erfindungsgemäße Applikator (z.B. Druckkopf) aus den Düsen keinen Sprühnebel des Beschichtungsmittels abgibt, sondern jeweils räumlich begrenzte Strahlen mit einer nur geringeren Strahlaufweitung. Der erfindungsgemäße Druckkopf unterscheidet sich also von Zerstäubern (z.B. Rotationszerstäuber, Luftzerstäuber, etc.), die keinen räumlich begrenzten Strahl des Beschichtungsmittels abgeben, sondern einen Sprühnebel des Beschichtungsmittels.

Hierbei ist auch zu erwähnen, dass die von dem Applikator abgegebenen Beschichtungsmittelstrahlen jeweils aus zahlreichen Tröpfchen bestehen können, die in Strahllängsrichtung voneinander getrennt sind. Es ist jedoch alternativ auch möglich, dass die einzelnen Beschichtungsmittelstrahlen jeweils in Strahllängsrichtung zusammenhängen und deshalb auch als kontinuierliche Beschichtungsmittelstrahlen bezeichnet werden können.

Weiterhin ist zu erwähnen, dass der erfindungsgemäße Applikator (z.B. Druckkopf) eine einzige Düsenreihe aufweisen kann, in der die Düsen vorzugsweise äquidistant angeordnet sind. Es besteht jedoch im Rahmen der Erfindung auch die Möglichkeit, dass der Druckkopf mehrere Düsenreihen aufweist, die vorzugsweise parallel zueinander angeordnet sind.

Darüber hinaus weist der erfindungsgemäße Applikator (z.B. Druckkopf) in Übereinstimmung mit dem Stand der Technik mehrere Aktoren auf, um die Düsen wahlweise freizugeben oder zu verschließen. Bei den Aktoren kann es sich beispielsweise um elektromagnetische Aktoren, piezoelektrische Aktoren oder pneumatische Aktoren handeln, um nur einige Beispiele zu nennen. Die Erfindung ist also hinsichtlich des physikalischen Wirkungsprinzips der Aktoren nicht auf einen bestimmten Aktortyp beschränkt.

Die Erfindung sieht nun vor, dass die Aktoren in unterschiedlichen Abständen rechtwinklig zu der Düsenreihe versetzt angeordnet sind, um eine hohe lineare Packungsdichte der Aktoren entlang der Düsenreihe und einen geringen Düsenabstand der benachbarten Düsen entlang der Düsenreihe zu ermöglichen.

In einer Variante der Erfindung sind die verschiedenen Aktoren hierbei in verschiedenen vertikalen Abständen zu der Düsenebene übereinander angeordnet, um die hohe lineare Packungsdichte der Aktoren entlang der Düsenreihe und den geringen Düsenabstand der benachbarten Düsen entlang der Düsenreihe zu ermöglichen. Die Anordnung der verschiedenen Aktoren in verschiedenen Ebenen übereinander parallel zu der Düsenebene ermöglicht es, dass die Aktoren in den verschiedenen Ebenen mit ihren Außenkonturen entlang der Düsenreihe überlappen. Dies wird dadurch ermöglicht, dass die Aktoren nicht in derselben Ebene angeordnet sind, sondern in unterschiedlichen Ebenen in unterschiedlichen Abständen zu der Düsenebene. Dadurch ist es möglich, den Düsenabstand der unmittelbar benachbarten Düsen unter die Breite der Aktoren entlang der Düsenreihe zu verringern.

In einer anderen Variante der Erfindung ist dagegen vorgesehen, dass die Aktoren in verschiedenen horizontalen Abständen in der Düsenebene zu der Düsenreihe angeordnet sind, um die hohe lineare Packungsdichte der Aktoren entlang der Düsenreihe und dem geringen Düsenabstand der benachbarten Düsen entlang der Düsenreihe zu ermöglichen. Hierbei sind die Aktoren also parallel zu der Düsenebene seitlich zu der Düsenreihe in verschiedenen Abständen versetzt. Auch dies ermöglicht es, dass der Düsenabstand zwischen den benachbarten Düsen unter die Breite der Aktoren entlang der Düsenreihe verringert wird. Auch in dieser Variante kann also die Packungsdichte der Aktoren entlang der Düsenreihe erhöht und der Düsenabstand entsprechend verringert werden.

Die erste Variante sieht also eine vertikal versetzte Anordnung der Aktoren vor, während die zweite Variante eine horizontal versetzte Anordnung der Aktoren vorsieht. Die Begriffe "horizontal" und "vertikal" beziehen sich hierbei jeweils auf die Düsenebene, d.h. bei einer horizontal versetzten Anordnung der Aktoren sind die Aktoren parallel zu der Düsenebene versetzt, während eine vertikale Versetzung bedeutet, dass die Aktoren rechtwinklig zu der Düsenebene versetzt angeordnet sind.

Die beiden vorstehend beschriebenen Varianten der Erfindung können jeweils allein oder in Kombination miteinander eingesetzt werden.

Die Erfindung ermöglicht es, dass die Aktoren eine Außenabmessung entlang der Düsenreihe haben, die größer ist als der Düsenabstand entlang der Düsenreihe. Die Erfindung ermöglicht also ohne eine Miniaturisierung der Aktoren eine Verringerung des Düsenabstands.

Gemäß der Erfindung sind die Aktoren jeweils mit einer verschiebbaren Ventilnadel verbunden. Die Düsen des Druckkopfs werden hierbei durch die Ventilnadel freigegeben oder verschlossen. Die Aktoren können also in einer linearen Aktorreihe parallel zu der Düsenreihe angeordnet sein. Die Kraftübertragung von den Aktoren auf die Ventilnadeln kann hierbei durch ein mechanisches Verbindungselement erfolgen, wie beispielsweise einen Arm (Hammer), einen Hubbalken oder einen Kipphebel, wobei der Kipphebel schwenkbar ist und einseitig oder zweiseitig wirken kann.

In einer Variante der Erfindung sind die Aktornadeln selbst auch die Ventilnadeln, so dass auf ein Verbindungselement zwischen den Aktornadeln und den Ventilnadeln verzichtet werden kann.

In einer anderen Variante der Erfindung sind dagegen zusätzlich zu den Aktornadeln separate Ventilnadeln vorgesehen. Die Aktornadeln wirken dabei über Verbindungselemente (z.B. Arm, Kipphebel, Hammer) auf die Ventilnadeln.

In einer Variante der Erfindung wirken mehrere (z.B. zwei) Aktoren jeweils gemeinsam auf eine Ventilnadel, insbesondere über einen gemeinsamen Hubbalken. Die beiden Aktoren können hierbei außen auf den Hubbalken wirken, während die Ventilnadel von dem Hubbalken in der Mitte des Hubbalkens angetrieben wird. Die beiden Aktoren können den Hubbalken wahlweise in die Schließstellung ziehen und in die Öffnungsstellung drücken oder umgekehrt in die Schließstellung drücken und in die Öffnungsstellung ziehen.

Es wurde bereits vorstehend erwähnt, dass in einer Variante der Erfindung vorgesehen ist, dass die Aktoren in unterschiedlichen vertikalen Abständen zu der Düsenebene versetzt übereinander angeordnet sind. Der Abstand zwischen den verschiedenen Aktoren und der Düsenebene ist hierbei also unterschiedlich. Dies ermöglicht es, dass die Ventilnadeln unterschiedlich lang sind. Die von der Düsenebene entfernteren Aktoren haben dann eine längere Ventilnadel als die Aktoren, die sich näher an der Düsenebene befinden.

Allerdings hat die unterschiedliche Länge der Ventilnadeln zur Folge, dass die Ventilnadeln ein unterschiedliches Trägheitsverhalten haben, so dass das dynamische Ansprechverhalten der Aktoren in Abhängigkeit von der Länge der Ventilnadeln unterschiedlich ist. Es kann deshalb auch sinnvoll sein, dass alle Aktoren unabhängig von ihrem Abstand zu der Düsenebene alle im Wesentlichen gleich lange und/oder gleich schwere Ventilnadeln haben, damit das dynamische Ansprechverhalten der Aktoren unabhängig von ihrem Abstand zu der Düsenebene einheitlich ist. Die verschiedenen Aktoren greifen dann in unterschiedlichen Abständen zu der Düsenebene an den einheitlich langen Ventilnadeln an.

Die Ventilnadeln können einteilig oder mehrteilig (z.B. zweiteilig) sein.

In einer Ausgestaltung der Erfindung weisen die Ventilnadeln jeweils eine Ventilnadelspitze auf, die sich zu ihrem freien Ende hin konisch verjüngt.

Darüber hinaus besteht im Rahmen der Erfindung die Möglichkeit, dass die einzelnen Ventilnadelspitzen jeweils ein separates Dichtelement aufweisen.

Beispielsweise kann das separate Dichtelement auf die Ventilnadelspitze aufgeklebt werden. Alternativ besteht auch die Möglichkeit, dass die Ventilnadelspitze eine Fassung aufweist, in die das Dichtelement eingesetzt ist. Darüber hinaus besteht alternativ auch die Möglichkeit, dass die Ventilnadelspitze auf einem Teil ihrer Länge von dem separaten Dichtelement umhüllt wird.

Ferner ist hierbei zu erwähnen, dass die Ventilnadel und das Dichtelement aus unterschiedlichen Materialien bestehen können, insbesondere aus Metall für die Ventilnadel und aus Kunststoff für das Dichtelement.

Die Befestigung des Dichtelements an der Ventilnadelspitze kann beispielsweise durch ein Spritzgussverfahren, durch Tauchen, durch Aufschweißen oder durch Aufvulkanisieren erfolgen, um nur einige Beispiele zu nennen.

In einer Ausgestaltung der Erfindung ist vorgesehen, dass mindestens eine der Aktornadeln mehrere Düsen verschließt. Eine Möglichkeit hierzu besteht darin, dass eine Aktornadel mechanisch auf mehrere verschiebbare Ventilnadeln wirkt, die jeweils eine Düse verschließen. Eine andere Möglichkeit zur Realisierung dieser technischen Gestaltung besteht darin, dass mindestens eine der Aktornadeln mit einem Dichtelement verbunden ist, das zusammen mehrere der Düsen verschließt oder öffnet.

Weiterhin ist in einer Ausgestaltung der Erfindung vorgesehen, dass den einzelnen Düsen jeweils ein Ventilsitz mit einem separaten Dichtelement zugeordnet ist, wobei der Ventilsitz von einer Ventilnadelspitze wahlweise verschlossen oder freigegeben wird. Das Dichtelement in dem Ventilsitz und die Ventilnadelspitze können hierbei beispielsweise aus Metall, Kunststoff, Keramik oder Halbleiter bestehen, so dass die Düsennadelspitze einerseits und das Dichtelement in dem Ventilsitz andererseits eine Materialpaarung aus Metall, Keramik, Halbleiter, und/oder Kunststoff sein kann.

In einer Ausgestaltung der Erfindung werden die Ventilnadel bzw. die Aktornadel durch eine Rückstellfeder mit einer Rückstellkraft beaufschlagt, wobei die Rückstellkraft wahlweise in die Öffnungsstellung oder in die Schließstellung wirken kann.

In einer besonderen Ausführung wirken die Aktoren doppelt, d.h. in beide Richtungen. In diesem Fall werden keine Federn zur Rückstellung benötigt.

Darüber hinaus können die einzelnen Aktoren jeweils eine Positionsjustierung aufweisen, um die Position des jeweiligen Aktors innerhalb des Druckkopfs zu justieren. Beispielsweise kann eine solche Positionsjustierung Stellschrauben, Stellringe oder einen Platzvorhalt für Unterlegplättchen aufweisen.

Ferner ist zu erwähnen, dass die einzelnen Aktoren vorzugsweise ein Aktorgehäuse, einen Hammer, einen Anker (Stößel), einen Deckel und/oder einen Kern aus einem weichmagnetischen Material aufweisen, insbesondere mit einer Sättigungsmagnetisierung von 0,01T, 2,4T oder 0,6-2,4T. Das Aktorgehäuse kann beispielsweise zylindrisch sein und einen separaten Deckel aufweisen. Dabei kann der Deckel beispielsweise durch eine Verklebung oder eine Verschraubung mit dem Aktorgehäuse verbunden sein.

Die Aktoren, die Aktornadeln, und/oder die Düsennadeln und die Düsenplatte können in einem Gehäuse montiert sein. Gemäß der Erfindung ist das Gehäuse mindestens zweiteilig. So ist der Gehäuseteil, in dem die Aktoren positioniert werden, zweiteilig, so dass die Hälfte der Aktoren und Aktorstangen einer ersten Gehäusehälfte zugeordnet sind und die zweite Hälfte der Aktoren und Aktorstangen einer zweiten Gehäusehälfte.

Die Aktoren können in mehreren Ebenen übereinander und mehrere Aktoren können in jeder Aktorebene nebeneinander angeordnet sein.

In einer besonders vorteilhaften Ausführung werden die Ventilnadeln jeweils einer vertikalen Aktorreihe im Abstand der Düsenöffnungen zueinander nebeneinander positioniert. Daran angrenzend folgt eine Lücke, in die die Ventilnadeln der vertikalen Aktorreihe der anderen Gehäusehälfte positioniert werden.

Der minimal mögliche Düsenabstand ergibt sich aus der horizontalen und vertikalen Anordnung der Aktoren und damit einhergehend der Aktornadeln bzw. der Ventilnadeln nach folgender Formel:

$$a = \frac{n}{e\,r\,h}$$

wobei

  a = Düsenabstand [mm]
  n = Anzahl der Düsen
  e = Anzahl der Ebenen
  r = Anzahl der Aktoren in einer Reihe
  h = Anzahl der Gehäuseteile

Beispiel:
aus n = 48, e = 6, r = 4 und h = 2 ergibt sich ein minimal möglicher Düsenabstand von 1mm.

Die Anzahl der Ebenen e kann ≥2, ≥6 oder sogar ≥12 sein.

  Die Anzahl der Aktoren in einer Reihe r kann ≥1, ≥4, ≥10 oder sogar ≥100 sein
  Anzahl der Gehäuseteile h kann >1, ≥2 oder sogar ≥4 sein

Der maximale Aktordurchmesser d (inklusive seiner ihn begrenzenden Wandungen) ergibt sich in diesem Zusammenhang aus der Formel

$$d \le h\,e$$

oder

$$d \le \frac{n}{r\,a}$$

Beispiel: aus e = 6 und h = 2 ergibt sich ein maximal möglicher Aktordurchmesser von 12mm.

Bei dem erfindungsgemäßen Druckkopf können die unmittelbar benachbarten Düsen bezüglich ihrer Düsenmittelpunkte einen sehr geringen Düsenabstand aufweisen, der beispielsweise höchstens 3mm, 2mm, 1,5mm, 1,3mm, 1mm oder sogar höchstens 0,8mm betragen kann.

Die unmittelbar vertikal benachbarten Aktoren können hierbei bezüglich der Längsachse ihrer Ventilnadeln einen Aktorabstand von höchstens 3mm, 2mm, 1,5mm, 1,3mm, 1mm oder sogar 0,8mm aufweisen.

Ferner ist zu erwähnen, dass die Düsen in einer linearen Düsenreihe angeordnet sein können, insbesondere äquidistant.

Darüber hinaus ist zu erwähnen, dass die verschiedenen Ventilnadeln vorzugsweise parallel zueinander verlaufen, insbesondere rechtwinklig zu der Düsenebene.

Insgesamt kann der Druckkopf eine große Anzahl von Düsen enthalten, beispielsweise mehr als 20, 30, 40, 50, 100, 150 oder sogar mehr als 200 Düsen.

Ferner kann der Druckkopf für die einzelnen Aktornadeln bzw. Ventilnadeln Führungselemente (z.B. Führungsschienen) aufweisen, die die Nadeln auf dem Weg zur Düsenplatte stabilisieren bzw. den Weg zur Düsenplatte vorgeben, um dadurch eine Knickung der Aktornadeln bzw. Ventilnadeln zu verhindern. Die Führungselemente führen also die Aktornadeln bzw. Ventilnadeln radial.

Zu den einzelnen Aktornadeln bzw. Ventilnadeln ist zu erwähnen, dass sie ein bestimmtes Verhältnis von Durchmesser zu Länge haben können, das im Rahmen der Erfindung kleiner sein kann als 0,2, 0,15, 0,007 oder 0,005.

Zu der Länge der einzelnen Aktornadeln bzw. Ventilnadeln ist zu erwähnen, dass diese vorzugsweise im Bereich von 20mm-500mm, 75mm-300mm oder 75mm-150mm liegen kann.

Der axiale maximale Hub der einzelnen Aktornadeln bzw. Ventilnadeln liegt dagegen vorzugsweise im Bereich von 10μm-500μm, 30μm-200μm oder 30μm-100μm.

Ferner ist zu erwähnen, dass die Ventilnadeln zum Korrosionsschutz mit einer Korrosionsschutzbeschichtung versehen sein können. Diese Korrosionsschutzbeschichtung kann beispielsweise aus Diamondlike-Carbon oder Carbon-Nitride bestehen, wobei die Korrosionsschutzbeschichtung beispielsweise durch Chemical-Vapour-Deposition (CVD) oder Physical-Vapour-Deposition (PVD) aufgebracht werden kann.

Es wurde bereits vorstehend kurz erwähnt, dass die Aktoren beispielsweise elektromagnetisch, piezoelektrisch oder pneumatisch (einfach wirkend oder doppelt wirkend) arbeiten können. Die Erfindung ist also hinsichtlich des Typs der Aktoren nicht auf ein bestimmtes Wirkungsprinzip beschränkt.

Bei einer Realisierung als elektromagnetischer Aktor haben die Aktoren vorzugsweise eine Spule mit einer Windungszahl von 10-2000, 200-1000 oder 250-900.

Darüber hinaus sind die Spulen hierbei vorzugsweise mit einem Spulendraht bewickelt, der einen Drahtdurchmesser von 0,05mm-2mm, 0,1mm-1mm oder 0,1-0,5mm aufweist.

Die elektrische Kontaktierung der elektrisch angesteuerten Aktoren in dem erfindungsgemäßen Druckkopf kann beispielsweise durch integrierte Kontaktstifte erfolgen oder durch eine Herausführung des Spulendrahts.

Die Aktoren können mit einem Fluid, insbesondere mit einem Gas wie z.B. Druckluft angeblasen oder umspült werden, um die beim Betrieb anfallende Wärme abzuführen. Die Abführung des Fluids kann sowohl über das Gehäuseinnere, wie auch über die Gehäuseaußenseite geschehen.

Die Außenabmessungen des erfindungsgemäßen Druckkopfs (d.h. maximale Länge, Breite bzw. Höhe) betragen vorzugsweise höchstens 550mm, 450mm oder 350mm.

Weiterhin ist zu erwähnen, dass der Druckkopf beispielsweise Anschlüsse für die Zuführung von Beschichtungsmittel, für die Zuführung von Spülmittel, für die Zuführung von Druckluft und/oder für die Rückleitung in eine Rückführung aufweisen kann. Dies ermöglicht es auch, dass der Druckkopf eine integrierte Materialzirkulation aufweist.

Darüber hinaus ist noch zu erwähnen, dass die Erfindung nicht nur Schutz beansprucht für den vorstehend beschriebenen Druckkopf als einzelnes Bauteil. Vielmehr beansprucht die Erfindung auch Schutz für einen Beschichtungsroboter (z.B. Lackierroboter) mit einem derartigen Druckkopf.

Hierbei kann der Druckkopf beispielsweise durch eine Schnellwechselvorrichtung auswechselbar an dem Beschichtungsroboter befestigt werden. Eine derartige Schnellwechselvorrichtung kann beispielsweise einen Spannzapfen aufweisen, wie es an sich aus dem Stand der Technik bekannt ist und deshalb nicht näher beschrieben werden muss.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung näher erläutert. Es zeigen:

Fig. 1     eine schematische Darstellung eines herkömmlichen Druckkopfs mit einem großen Düsenabstand, so dass die Tröpfchen auf dem Bauteil nicht zusammenlaufen,

Fig. 2     eine Abwandlung von Fig. 1, wobei der Druckkopf gedreht ist, um den Düsenabstand rechtwinklig zu der Lackierbahn zu verringern,

Fig. 3A     eine schematische Darstellung des herkömmlichen Druckkopfs gemäß den Fig. 1 und 2,

Fig. 3B     eine schematische Schnittansicht des Druckkopfs aus Fig. 3A,

Fig. 4     eine schematische Darstellung eines erfindungsgemäßen Druckkopfs mit einer vertikal versetzten Anordnung der einzelnen Aktoren,

Fig. 5     eine schematische Darstellung eines erfindungsgemäßen Druckkopfs mit einer vertikal versetzten Anordnung der verschiedenen Aktoren zur Erhöhung der linearen Packungsdichte,

Fig. 6     eine schematische Darstellung eines erfindungsgemäßen Druckkopfs mit einer vertikal und horizontal versetzten Anordnung der Aktoren zur Erhöhung der linearen Packungsdichte,

Fig. 7     eine schematische Darstellung eines erfindungsgemäßen Druckkopfs mit einer vertikal versetzten Anordnung der Aktoren und einheitlich langen Ventilnadeln,

Fig. 8     eine schematische Darstellung zur Verdeutlichung der Kraftübertragung von den Aktoren auf die Ventilnadeln,

Fig. 9     eine schematische Darstellung einer Ventilnadel,

Fig. 10     eine schematische Darstellung eines erfindungsgemäßen Druckkopfs, wobei jeder Aktor auf mehrere Ventilnadeln wirkt,

Fig. 11     eine schematische Darstellung eines erfindungsgemäßen Druckkopfs, wobei jeder der Aktoren auf ein Dichtelement wirkt, das jeweils mehrere Düsen freigibt oder verschließt,

Fig. 12     eine Schnittansicht durch einen erfindungsgemäßen Aktor,

Fig. 13     eine Abwandlung von Fig. 12,

Fig. 14     eine schematische Darstellung zur Verdeutlichung der seitlich versetzten Anordnung der Aktoren zur Erhöhung der linearen Packungsdichte der Aktoren,

Fig. 15     eine schematische Darstellung einer Ausgestaltung, wobei zwei Aktoren über einen Hubbalken auf eine Ventilnadel wirken,

Fig. 16     eine Abwandlung von Fig. 15,

Fig. 17     eine schematische Darstellung, wobei ein Aktor über einen einseitigen Kipphebel auf eine Ventilnadel wirkt,

Fig. 18A     eine Abwandlung von Fig. 6 mit zwei Aktorreihen in einer Aufsicht,

Fig. 18B     eine Seitenansicht zu Fig. 18A,

Fig. 19A     eine Abwandlung von Fig. 18A,

Fig. 19B     eine Seitenansicht zu Fig. 19A,

Fig. 20     eine schematische Darstellung zur vertikalen und horizontalen Entzerrung der Aktoren,

Fig. 21     eine Abwandlung von Fig. 20,

Fig. 22A     eine schematische Darstellung zur Kühlung der Aktoren,

Fig. 22B     eine andere Ansicht zu Fig. 22A,

Fig. 23-25     verschiedene Ansichten von Ventilnadelspitzen,

Figur 26     eine schematische Darstellung von Ventilnadelspitzen, die an eine Membran angeformt sind.

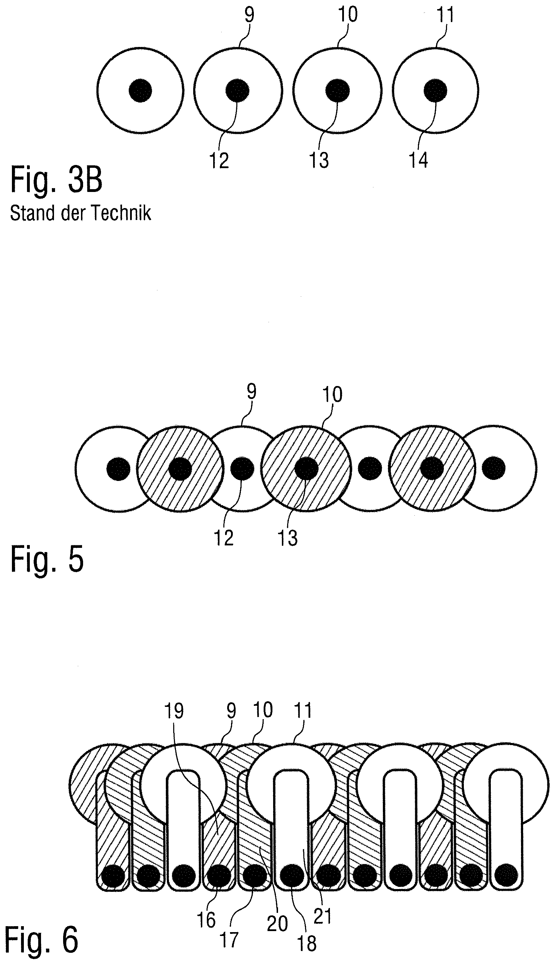

Figur 4 zeigt eine schematische Darstellung eines erfindungsgemäßen Druckkopfs, der teilweise mit dem bekannten Druckkopf gemäß den Figuren 3A und 3B übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Aktoren 9-11 hierbei nicht in derselben Ebene parallel zu der Ebene der Düsenplatte 1 angeordnet sind. Vielmehr sind die Aktoren 9-11 hierbei in unterschiedlichen Abständen zu der Ebene der Düsenplatte 1 angeordnet, und zwar so, dass sich ihre Außenkonturen in vertikaler Richtung (d.h. rechtwinklig zur Ebene der Düsenplatte 1) nicht überlappen. Dadurch ist es möglich, den Abstand zwischen den Aktoren 9-11 entlang der Düsenreihe zu verringern, ohne dass eine zusätzliche Miniaturisierung der Aktoren 9-11 erforderlich ist. Der Düsenabstand d kann also geringer sein als die Breite b der einzelnen Aktoren 9-11.

Bei dem Ausführungsbeispiel gemäß Figur 4 sind die Aktoren 9-11 hierbei in drei verschiedenen Aktorebenen parallel zu der Ebene der Düsenplatte 1 angeordnet.

Bei dem alternativ möglichen Ausführungsbeispiel gemäß Figur 5 sind die verschiedenen Aktoren 9, 10 dagegen nur in zwei verschiedenen Aktorebenen parallel zu der Ebene der Düsenplatte 1 angeordnet.

Figur 6 zeigt eine schematische Darstellung eines weiteren möglichen Ausführungsbeispiels der Erfindung, das wieder teilweise mit den vorstehend beschriebenen Ausführungsbeispielen übereinstimmt, so dass zur Vermeidung von Wiederholungen auf die vorstehende Beschreibung verwiesen wird.

Eine Besonderheit besteht hierbei darin, dass die Aktoren 9-11 sowohl vertikal, als auch horizontal versetzt sind. Die Ventilfunktion wird von den Ventilnadeln 16-18 erfüllt, die von den Aktoren 9-11 über mechanische Verbindungselemente 19-21 (z.B. Arm, Hubbalken, Kipphebel) angetrieben werden.

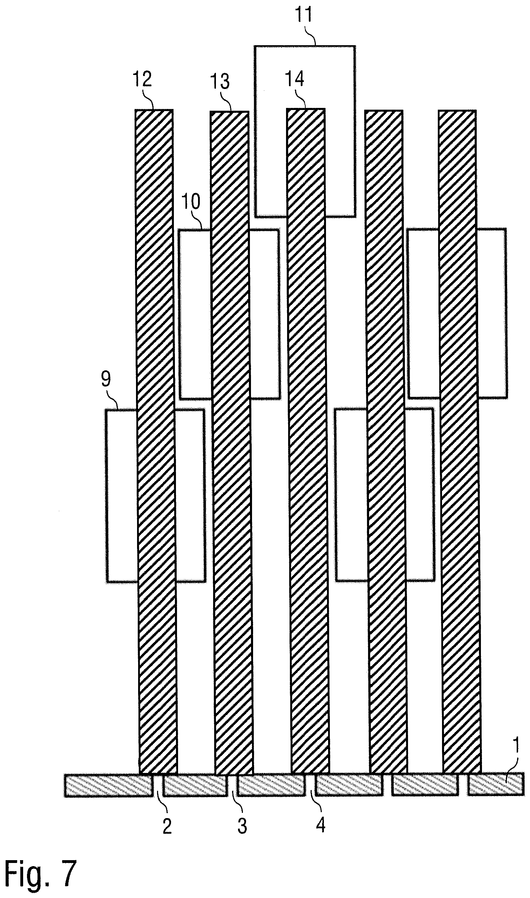

Figur 7 zeigt eine Abwandlung des Ausführungsbeispiels gemäß Figur 4, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Ventilnadeln 12-14 hierbei eine einheitliche Länge aufweisen und somit auch eine einheitliche Masse haben. Dies ist vorteilhaft, weil dadurch das dynamische Ansprechverhalten der Aktoren 9-10 nicht durch unterschiedliche Trägheitsmassen verändert wird.

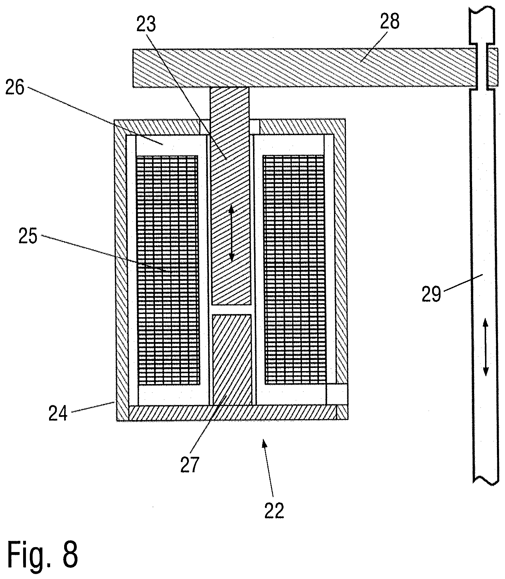

Figur 8 zeigt eine Schnittansicht eines erfindungsgemäßen Aktors 22 mit einem in Richtung des Doppelpfeils verschiebbaren Anker 23, einem Gehäuse 24, einer Spule 25, einem Spulenkörper 26 und einem magnetischen Kern 27.

Der verschiebbare Anker 23 überträgt seine Bewegung hierbei über einen Hammer 28 auf eine Ventilnadel 29.

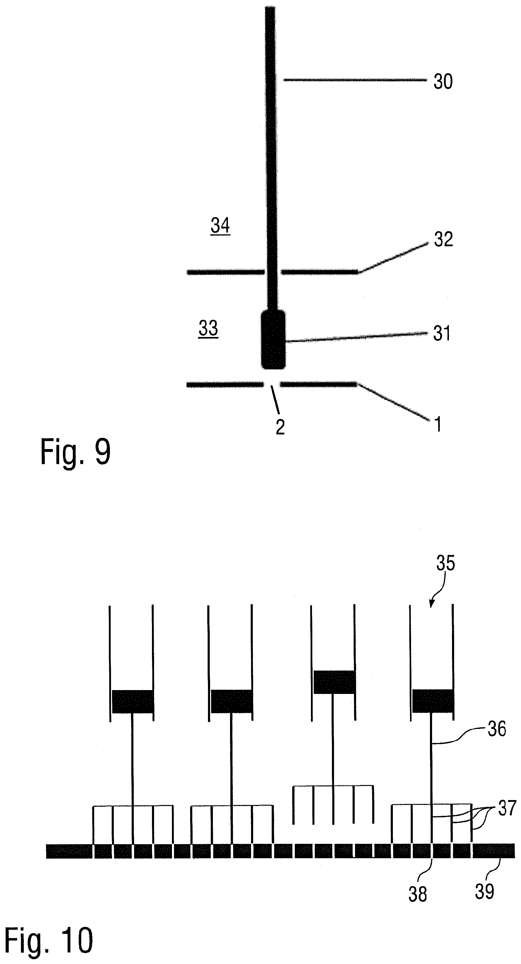

Figur 9 zeigt eine schematische Darstellung einer Ventilnadel 30 mit einer Ventilnadelspitze 31 mit einer zusätzlichen Abdichtung.

Darüber hinaus ist hierbei eine Dichtungsmembran 32 dargestellt, die einen beschichtungsmittelgefüllten Düsenraum 33 von einem Aktorraum 34 trennt. Die Dichtungsmembran 32 verhindert hierbei, dass das Beschichtungsmittel aus dem Düsenraum 33 in den Aktorraum 34 übertritt und dort die Aktoren verschmutzt.

Figur 10 zeigt eine Ausgestaltung der Erfindung, wobei ein Aktor 35 mit seiner Aktornadel 36 jeweils auf fünf Ventilnadeln 37 wirkt und somit mehrere Düsen 38 in einer Düsenplatte 39 wahlweise verschließt oder freigibt.

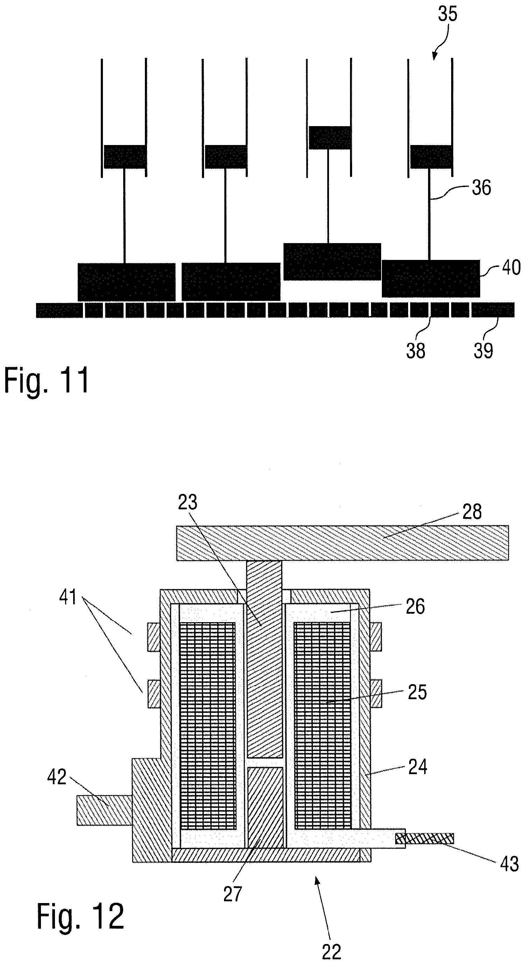

Figur 11 zeigt eine Abwandlung der Ausgestaltung gemäß Figur 10. Hierbei wirkt die Aktornadel 36 auf ein Dichtelement 40, das dann mehrere der Düsen 38 wahlweise freigibt oder verschließt.

Figur 12 zeigt eine Abwandlung von Figur 8, so dass zur Vermeidung von Wiederholungen auf die vorstehende Beschreibung verwiesen wird, wobei für entsprechende Einzelheiten dieselben Bezugszeichen verwendet werden.

Eine Besonderheit dieser Darstellung besteht darin, dass zusätzlich eine Einstellvorrichtung 41 gezeigt ist, um die Position des Aktors 22 in dem Druckkopf justieren zu können.

Darüber hinaus sind integrierte Passflächen bzw. Passstifte 42 gezeigt.

Schließlich zeigt Figur 12 auch eine integrierte Kontaktierung 43 zur elektrischen Kontaktierung der Spule 25.

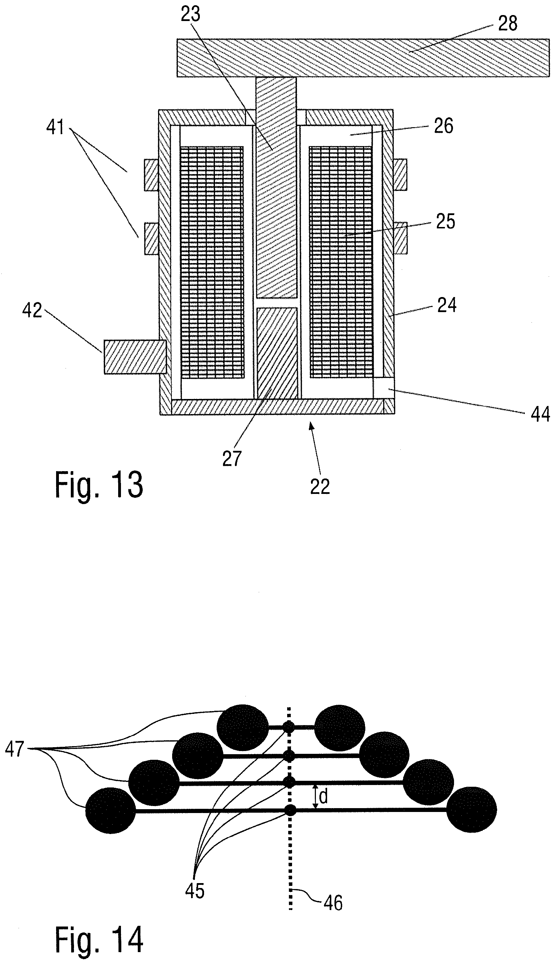

Figur 13 zeigt eine Abwandlung von Figur 12, so dass zur Vermeidung von Wiederholungen auf die vorstehende Beschreibung verwiesen wird und für die entsprechenden Einzelheiten dieselben Bezugszeichen verwendet werden.

Eine Besonderheit dieses Ausführungsbeispiels besteht darin, dass anstelle der integrierten elektrischen Kontaktierung 43 eine Bohrung 44 zur elektrischen Kontaktierung vorgesehen ist. Aus dieser Bohrung können die Kabelenden der Spule herausgeführt werden.

Figur 14 zeigt eine schematische Darstellung zur Verdeutlichung einer zweiten Erfindungsvariante. Hierbei sind Düsen 45 entlang der Düsenreihe 46 äquidistant in einem bestimmten Düsenabstand d angeordnet.

Die Düsen 45 werden hierbei von nicht dargestellten Ventilnadeln freigegeben bzw. verschlossen, wobei die einzelnen Ventilnadeln von Aktoren 47 mechanisch angetrieben werden. Die Aktoren 47 sind hierbei bezüglich der Düsenreihe 46 in verschiedenen Abständen seitlich neben der Düsenreihe 46 versetzt angeordnet. Dies ermöglicht es, dass die lineare Packungsdichte der Aktoren 47 entlang der Düsenreihe 46 erhöht wird, so dass auch der Düsenabstand d entsprechend verringert werden kann.

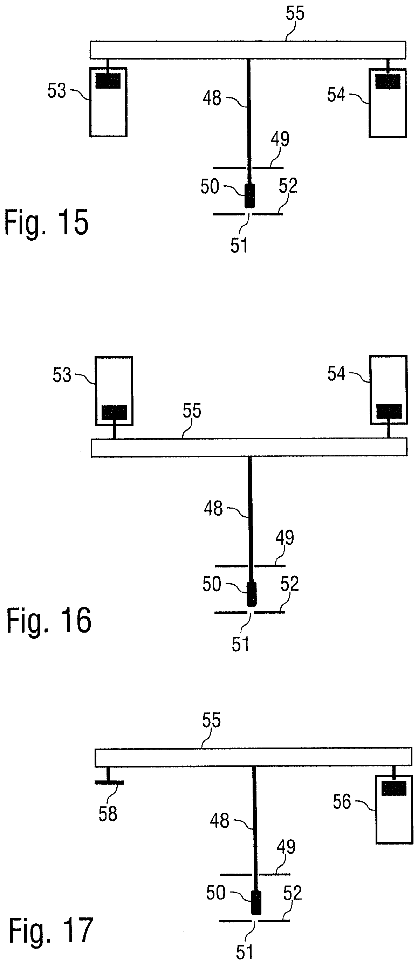

Figur 15 zeigt eine schematische Darstellung zur mechanischen Ansteuerung einer Ventilnadel 48, die durch eine Dichtungsmembran 49 hindurchgeführt ist und mit ihrer Ventilnadelspitze 50 eine Düse 51 in einer Düsenplatte 52 wahlweise freigibt oder verschließt.

Die Ansteuerung der Ventilnadel 48 erfolgt hierbei durch zwei Aktoren 53, 54, die über einen gemeinsamen Hubbalken 55 auf die Düsennadel 48 wirken.

Die beiden Aktoren 53, 54 wirken hierbei außen auf den Hubbalken 55, während der Hubbalken 55 an seiner Mitte auf die Düsennadel 48 wirkt.

Weiterhin ist zu dieser Ausgestaltung zu erwähnen, dass die beiden Aktoren 53, 54 die Ventilnadel 48 in eine Schließstellung ziehen und in die entgegengesetzte Öffnungsstellung drücken.

Figur 16 zeigt eine Abwandlung von Figur 15, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die beiden Aktoren 53, 54 die Ventilnadel 48 in die Schließstellung drücken und in die Öffnungsstellung ziehen.

Figur 17 zeigt eine Abwandlung der Figuren 15 bzw. 16, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Ventilnadel 48 hierbei von einem einzigen Aktor 56 über einen einseitigen Kipphebel 57 angetrieben wird, wobei der Kipphebel 57 in einer Auflage 58 schwenkbar gelagert ist.

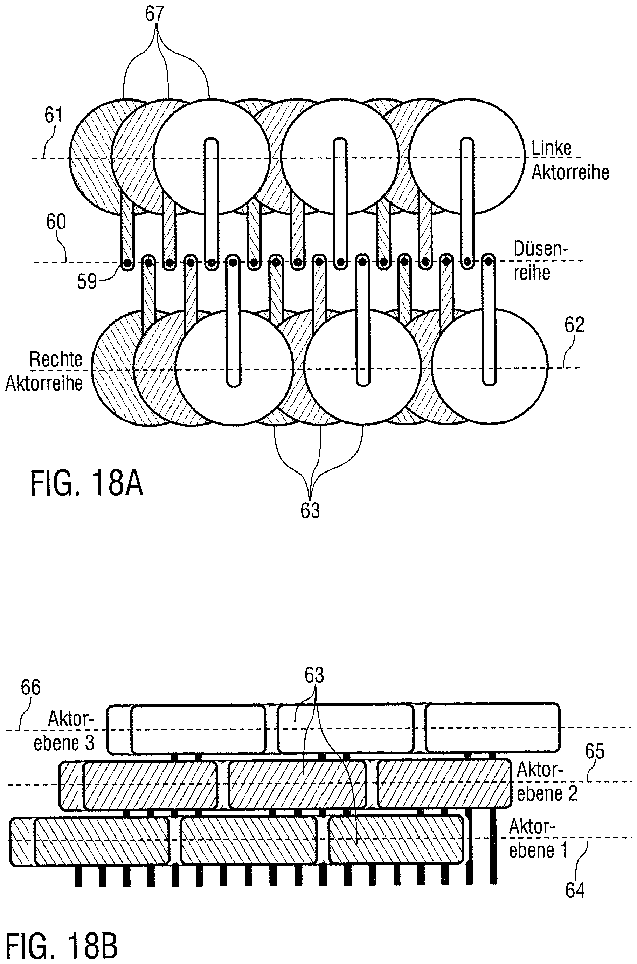

Die Figuren 18A und 18B zeigen eine Abwandlung des Ausführungsbeispiels gemäß Figur 6, so dass zur Vermeidung von Wiederholungen auch auf die vorstehende Beschreibung verwiesen wird.

Hierbei sind zahlreichen Düsen 59 in einer Düsenreihe 60 äquidistant hintereinander angeordnet.

Beiderseits der Düsenreihe 60 ist jeweils eine Aktorreihe 61, 62 angeordnet und zwar parallel zu der Düsenreihe 60.

Die Aktorreihe 62 umfasst hierbei mehrere Aktoren 63, die in drei Aktorebenen 64, 65, 66 übereinander angeordnet sind, wie aus Fig. 18B ersichtlich ist.

Die andere Aktorreihe 61 umfasst ebenfalls mehrere Aktoren 67, die auch in den drei Aktorebenen 64-66 übereinander angeordnet sind.

Die Aktoren sind hierbei also sowohl horizontal (d.h. quer zu der Düsenreihe 60) als auch vertikal (d.h. rechtwinklig zur Düsenebene) räumlich entzerrt angeordnet. Dies ermöglicht eine Verringerung des Düsenabstands zwischen den benachbarten Düsen 59 der Düsenreihe 60.

Hierbei sind die Ventilnadeln für die Düsen 59 der Düsenreihe 60 abwechselnd mit den Aktoren 67, 63 der beiden Aktorreihen 61, 62 verbunden.

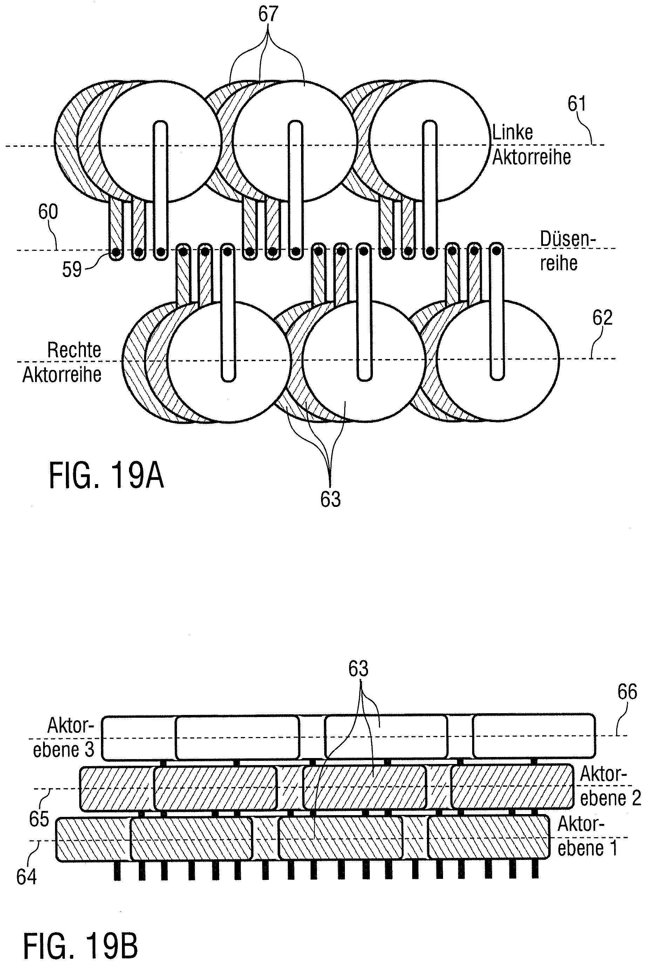

Die Figuren 19A und 19B zeigen eine Abwandlung des Ausführungsbeispiels gemäß den Figuren 18A und 18B, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Aktoren 63, 67 immer gruppenweise mit den zugehörigen Ventilnadeln für die Düsen 59 verbunden sind. So werden die Ventilnadeln für die ersten drei Düsen 59 der Düsenreihe 60 von den ersten drei Aktoren 67 der Aktorreihe 61 angesteuert. Die Ventilnadeln für die nächsten drei Düsen 59 der Düsenreihe 60 werden dann von den ersten drei Aktoren 63 der anderen Aktorreihe 62 angesteuert.

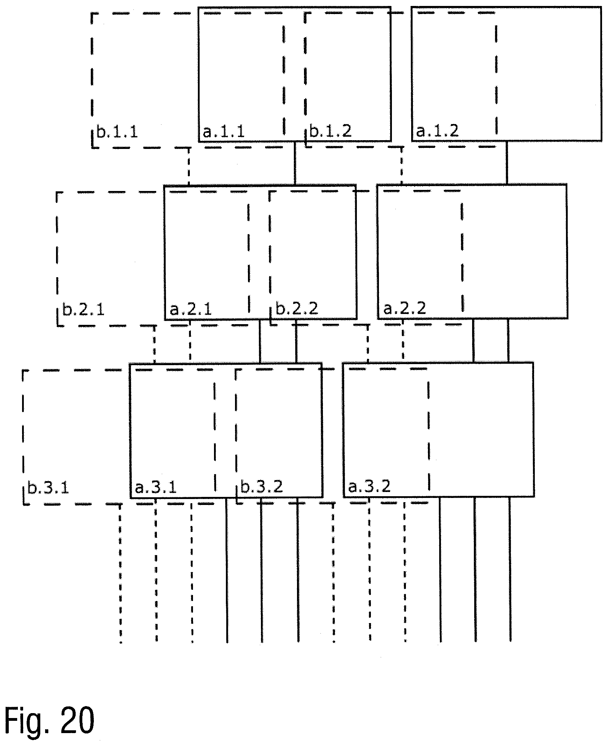

Figur 20 zeigt eine schematische Darstellung zur Erläuterung der räumlichen Entzerrung von Aktoren und zwar sowohl in vertikaler Richtung (d.h. rechtwinklig zur Düsenebene) als auch in horizontaler Richtung (d.h. parallel zur Düsenebene).

Hierbei sind in drei exemplarisch dargestellten Aktorebenen übereinander jeweils zwei Aktorreihen parallel zueinander und parallel zur Düsenreihe angeordnet.

In der oberen Aktorebene umfasst die rechte Aktorreihe exemplarisch zwei Aktoren a.1.1 und a.1.2, während die andere Aktorreihe exemplarisch zwei Aktoren b.1.1 und b.1.2 aufweist.

Das Gleiche gilt für die mittlere Aktorebene, die ebenfalls zwei Aktorreihen mit jeweils zwei Aktoren a.2.1, a.2.2 bzw. b.2.1 bzw. b.2.2 aufweist.

Schließlich enthält auch die untere Aktorebene zwei Aktorreihen mit exemplarisch jeweils zwei Aktoren a.3.1, a.3.2 bzw. b.3.1, b.3.2.

Hierbei ist zu erwähnen, dass die Anzahl der Aktoren in den einzelnen Aktorreihen in der Praxis wesentlich größer ist als vorstehend zur Veranschaulichung dargestellt und beschrieben wurde.

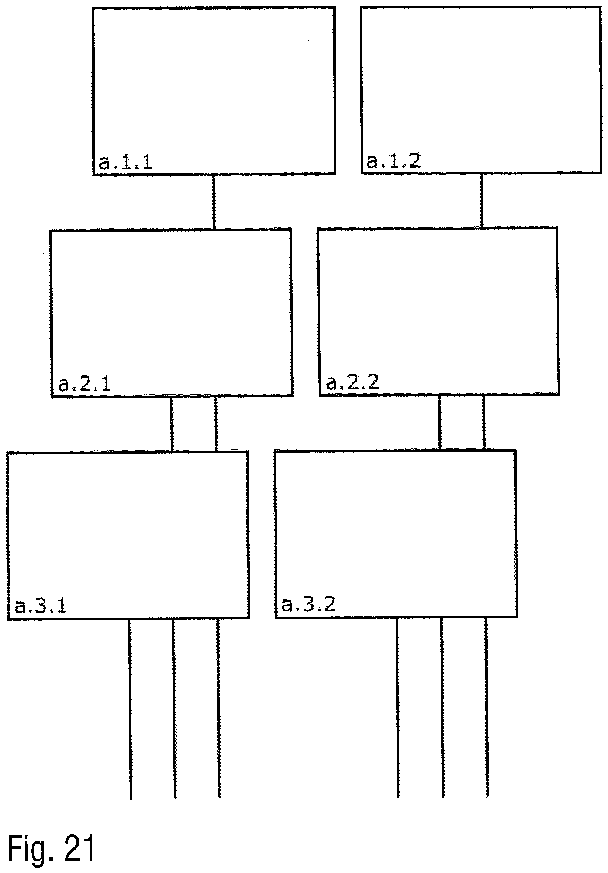

Figur 21 zeigt eine Abwandlung von Figur 20, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Aktoren a.1.1, a.1.2, a.2.1, a.2.2, a.3.1, a.3.2 hierbei räumlich nur vertikal entzerrt sind, d.h. in drei Aktorebenen übereinander. Eine horizontale räumliche Entzerrung (d.h. quer zur Düsenreihe) ist hierbei jedoch nicht vorgesehen.

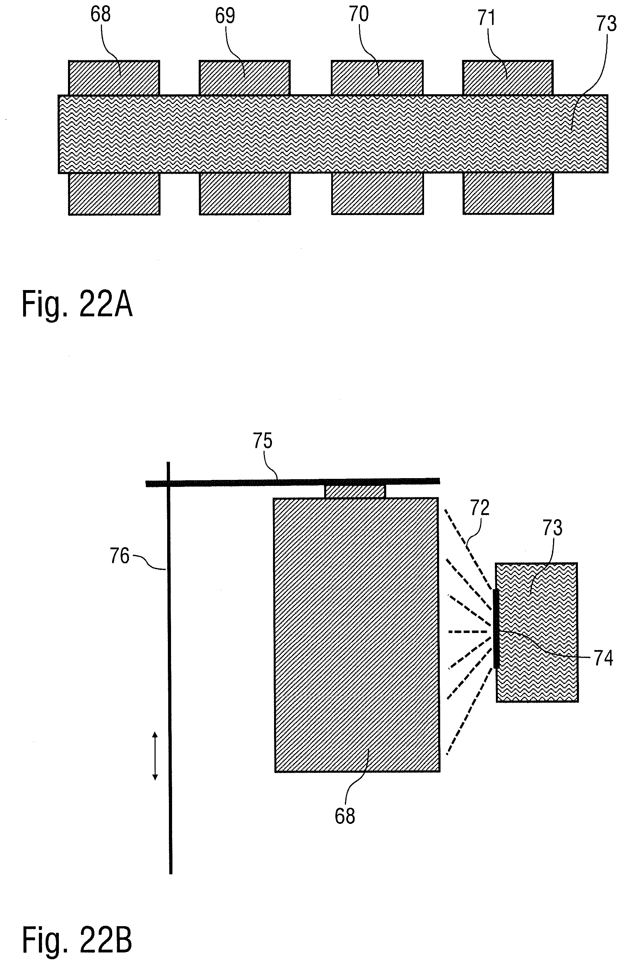

Die Figuren 22A und 22B zeigen eine schematische Darstellung zur Erläuterung der Kühlung von Aktoren 68-71 durch Druckluft 72, die aus einem Druckluftverteiler 73 durch eine Düse 74 ausströmt und auf die Aktoren 68-71 geleitet wird, um die Aktoren 68-71 zu kühlen.

Die einzelnen Aktoren 68-71 wirken hierbei jeweils über einen Hammer 75 auf jeweils eine Ventilnadel 76.

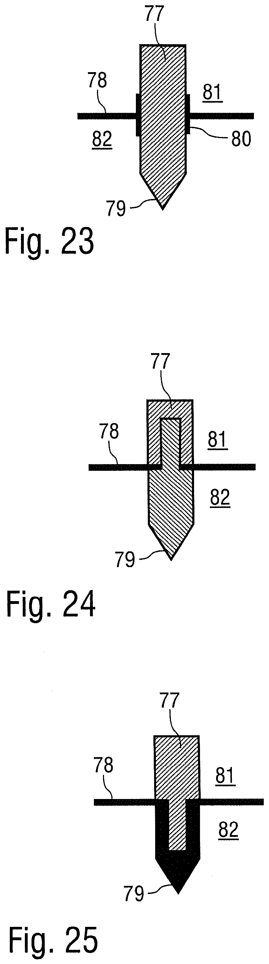

Die Figuren 23-25 zeigen verschiedene mögliche Ausgestaltungen zur Durchführung, Anbindung oder Auflegen von Ventilnadeln 77 durch eine Dichtungsmembran 78.

Bei Figur 23 ist die Ventilnadel 77 durchgehend und bildet somit mit ihrer Düsenverschlussspitze 79 gleichzeitig auch ein Dichtungselement zum Verschließen bzw. Freigeben eines entsprechenden Ventilsitzes.

Darüber hinaus ist aus der Zeichnung ersichtlich, dass an die Dichtungsmembran 14 ein Dichtungskragen 80 angeformt ist, der sowohl zu einem Aktorraum 81 hin als auch zu einem Düsenraum 82 hin von der Dichtungsmembran 78 absteht.

Bei der Ausgestaltung gemäß Figur 24 ist die Düsenverschlussspitze 79 von der Ventilnadel 77 getrennt und mit der Ventilnadel 77 verschraubt. Hierbei wird die Dichtungsmembran 78 zwischen der Ventilnadel 77 und der Düsenverschlussspitze 79 eingepresst, so dass die Ventilnadel 77 fest mit der Dichtungsmembran 78 verbunden ist. Eine Verschiebung der Ventilnadel 77 führt also zu einer entsprechenden Auslenkung der Dichtungsmembran 78.

Bei der Ausgestaltung gemäß Figur 25 weist die Dichtungsmembran 78 kein Loch zur Durchführung der Ventilnadel 77 auf. Vielmehr ist die Düsenverschlussspitze 79 einstückig an die Dichtungsmembran 78 angeformt. Auch hierbei ist die Ventilnadel 77 fest mit der Dichtungsmembran 78 verbunden, so dass eine Verschiebung der Ventilnadel 77 zu einer entsprechenden Auslenkung der Dichtungsmembran 78 führt.

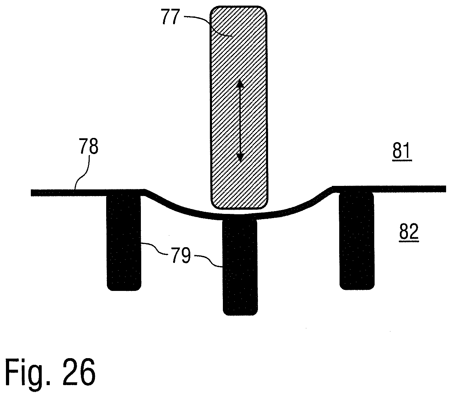

Figur 26 zeigt eine Dichtungsmembran 78 mit angeformten Düsenverschlussspitzen 79. Die Ventilnadel 77 kann mit der Dichtungsmembran 78 verbunden sein, sie kann aber auch nur aufgesetzt sein. Im Falle einer nur aufgesetzten Ventilnadel 77 wird das Öffnen der Düse durch den Lackdruck bewirkt. Der Lackdruck verformt dabei die Dichtungsmembran 78 in Richtung des Aktorraums 81 vom Düsenraum 82 weg.

**Bezugszeichenliste:**

| | |
|---|---|
| 1 | Düsenplatte |
| 2-4 | Düsen |
| 5-7 | Tröpfchen |
| 8 | Bauteil |
| 9-11 | Aktoren |
| 12-14 | Aktornadeln |
| 15 | Drehachse |
| 16-18 | Düsennadeln |
| 19-21 | Verbindungselement |
| 22 | Aktor |
| 23 | Anker |
| 24 | Gehäuse |
| 25 | Spule |
| 26 | Spulenkörper |
| 27 | Kern |
| 28 | Hammer |
| 29 | Düsennadel |
| 30 | Ventilnadel |
| 31 | Aktornadelspitze |
| 32 | Dichtungsmembran |
| 33 | Düsenraum |
| 34 | Aktorraum |
| 35 | Aktor |
| 36 | Aktornadel |
| 37 | Düsennadel |
| 38 | Düsen |
| 39 | Düsenplatte |
| 40 | Dichtelement |
| 41 | Einstellvorrichtung |
| 42 | Passfläche/Passstift |
| 43 | Integrierte Kontaktierung |
| 44 | Bohrung zur elektrischen Kontaktierung |
| 45 | Düsen |
| 46 | Düsenreihe |
| 47 | Aktoren |
| 48 | Düsennadel |
| 49 | Dichtungsmembran |
| 50 | Düsennadelspitze |
| 51 | Düse |
| 52 | Düsenplatte |
| 53, 54 | Aktoren |
| 55 | Hubbalken |
| 56 | Aktor |
| 57 | Kipphebel |
| 58 | Auflage |
| 59 | Düsen |
| 60 | Düsenreihe |
| 61, 62 | Aktorreihen |
| 63 | Aktoren |
| 64-66 | Aktorebenen |
| 67 | Aktoren |
| 68-71 | Aktoren |
| 72 | Druckluft |
| 73 | Druckluftverteiler |
| 74 | Düse |
| 75 | Hammer |
| 76 | Ventilnadel |
| 77 | Ventilnadel |
| 78 | Dichtungsmembran |
| 79 | Düsenverschlussspitze |
| 80 | Dichtungskragen |
| 81 | Aktorraum |
| 82 | Düsenraum |
| b | Breite der Aktoren entlang der Düsenreihe |
| d | Düsenabstand |
| a.1.1 | Aktor der rechten Aktorreihe der oberen Aktorebene |
| a.1.2 | Aktor der rechten Aktorreihe der oberen Aktorebene |
| b.1.1 | Aktor der linken Aktorreihe der oberen Aktorebene |
| b.1.2 | Aktor der linken Aktorreihe der oberen Aktorebene |
| a.2.1 | Aktor der rechten Aktorreihe der mittleren Ak- |

torebene

a.2.2   Aktor der rechten Aktorreihe der mittleren Aktorebene

b.2.1   Aktor der linken Aktorreihe der mittleren Aktorebene

b.2.2   Aktor der linken Aktorreihe der mittleren Aktorebene

a.3.1   Aktor der rechten Aktorreihe der unteren Aktorebene

a.3.2   Aktor der rechten Aktorreihe der unteren Aktorebene

b.3.1   Aktor der linken Aktorreihe der unteren Aktorebene

b.3.2   Aktor der linken Aktorreihe der unteren Aktorebene

**Patentansprüche**

1.  Applikator, insbesondere Druckkopf, zur Applikation eines Beschichtungsmittels, insbesondere eines Lacks, auf ein Bauteil, insbesondere auf ein Kraftfahrzeugkarosseriebauteil, mit

> a) mindestens einer Düsenreihe (46) mit mehreren Düsen (2-4; 38; 45; 51) zur Abgabe des Beschichtungsmittels in Form jeweils eines Strahls, wobei die Düsen (2-4; 38; 45; 51) entlang der Düsenreihe (46) und in einer gemeinsamen Düsenebene angeordnet sind, und
> b) mehreren jeweils mit einer verschiebbaren Ventilnadel verbundenen Aktoren (9-11; 22; 35; 47; 53, 54; 56) zum gesteuerten Freigeben oder Verschließen der Düsen (2-4; 38; 45; 51),
> c) wobei die einzelnen Aktoren (9-11; 22; 35; 47; 53, 54; 56) jeweils eine Außenabmessung (b) entlang der Düsenreihe (46) haben, die größer ist als der Düsenabstand (d) entlang der Düsenreihe (46), und
> d) einem Gehäuse,
> **dadurch gekennzeichnet,**
> e) **dass** das Gehäuse (24) aus mehreren Gehäuseteilen besteht,
> f) **dass** die Aktoren (9-11; 22; 35; 47; 53; 54; 56) je zur Hälfte in einem von zwei Gehäuseteilen vorgesehen sind, und
> g) **dass** die parallel angeordneten Ventilnadeln (30) einem der beiden Gehäuseteile zugeordnet sind.

2.  Applikator nach Anspruch 1, **dadurch gekennzeichnet,**

> a) **dass** die Aktoren (9-11) in verschiedenen Abständen und/oder Orientierungen zu der jeweils zugehörigen Düse angeordnet sind, um den geringen Düsenabstand (d) der benachbarten Düsen (2-4) entlang der Düsenreihe (46) zu ermöglichen, und/oder
> b) **dass** die Aktoren (9-11) in verschiedenen vertikalen Abständen zu der Düsenebene übereinander angeordnet sind, und/oder
> c) **dass** die Aktoren (9-11) in verschiedenen horizontalen Abständen zu der Düsenreihe nebeneinander angeordnet sind, und/oder
> d) **dass** die Aktoren (9-11) in gleichen horizontalen Abständen zu der Düsenreihe nebeneinander angeordnet sind.

3.  Applikator nach einem der vorhergehenden Ansprüche, **dadurch gekennzeichnet,**

> a) **dass** die Aktoren in mehreren Aktorebenen angeordnet sind, wobei die einzelnen Aktorebenen parallel zu der Düsenebene verlaufen, und
> b) **dass** in den einzelnen Aktorebenen jeweils zwei Aktorreihen beiderseits der Düsenreihe angeordnet sind, wobei die Aktorreihen jeweils mehrere Aktoren enthalten.

4.  Applikator nach Merkmal b) von Anspruch 2 und Anspruch 3, **dadurch gekennzeichnet,**

> a) **dass** die vertikal benachbarten Aktorebenen zueinander einen Versatz haben,
> b) **dass** der Versatz zwischen den vertikal benachbarten Aktorebenen im Wesentlichen
>
> > b1) gleich groß ist wie der Düsenabstand (d) zwischen den benachbarten Düsen in der Düsenreihe, oder
> > b2) ein ganzzahliges Vielfaches des Düsenabstands (d) ist, und/oder
>
> c) **dass** die Aktoren in den Aktorreihen im Wesentlichen äquidistant angeordnet sind.

5.  Applikator nach einem der vorhergehenden Ansprüche, **dadurch gekennzeichnet,**

> a) **dass** die Aktoren jeweils eine verschiebbare Aktornadel aufweisen,
> b) **dass** die Düsen durch jeweils die verschiebbare Ventilnadel freigegeben oder verschlossen werden können, und
> c) **dass** die einzelnen Aktornadeln jeweils durch ein mechanisches Verbindungselement mit der zugehörigen Ventilnadel verbunden sind, insbesondere durch einen Arm oder einen schwenkbaren einseitigen oder zweiseitigen Kipphebel.

6.  Applikator nach einem der Ansprüche 1 bis 4, **dadurch gekennzeichnet, dass** die Aktoren jeweils eine verschiebbare Aktornadel aufweisen, wobei die Aktornadel die Ventilnadel bildet, die in Abhängigkeit von ihrer Stellung die zugehörige Düse freigibt oder verschließt.

7. Applikator nach einem der vorhergehenden Ansprüche, **dadurch gekennzeichnet,**

   a) **dass** die Aktoren mit einem Fluid umspült werden, um die beim Betrieb anfallende Wärme abzuführen,
   b) **dass** die Abführung des Fluids über das Gehäuseinnere erfolgt, oder
   c) die Abführung des Fluids über die Gehäuseaußenseite erfolgt.

8. Applikator nach einem der vorhergehenden Ansprüche, **dadurch gekennzeichnet, dass** mehrere, insbesondere zwei, Aktoren (53, 54) gemeinsam auf eine Ventilnadel (48) wirken, nämlich über einen gemeinsamen Hubbalken (55), wobei die beiden Aktoren (53, 54) außen auf den Hubbalken (55) wirken und die Ventilnadel (48) von dem Hubbalken (55) in der Mitte des Hubbalkens (55) angetrieben wird.

9. Applikator nach einem der vorhergehenden Ansprüche, **dadurch gekennzeichnet,**

   a) **dass** die Aktoren (9-11) in Abhängigkeit von ihrem Abstand zu der Düsenebene mit unterschiedlich langen Ventilnadeln (12-14) verbunden sind, wobei die von der Düsenebene entfernteren Aktoren (9-11) mit einer längeren Ventilnadel (12-14) verbunden sind als die der Düsenebene näheren Aktoren (9-11), oder
   b) **dass** die Aktoren (9-11)

      b1) unabhängig von ihrem Abstand zu der Düsenebene alle mit im Wesentlichen gleich langen und/oder gleich schweren Ventilnadeln (12-14) verbunden sind, und/oder
      b2) an Angriffspunkten in unterschiedlichen Abständen zu der Düsenebene an den Ventilnadeln (12-14) angreifen.

10. Applikator nach Anspruch 9, **dadurch gekennzeichnet,**

    a) **dass** die Ventilnadeln (30) jeweils eine Ventilnadelspitze aufweist, die sich zu ihrem freien Ende hin konisch verjüngt, und
    b) **dass** die einzelnen Ventilnadeln (30) an ihrer Ventilnadelspitze jeweils ein separates Dichtelement aufweist, und
    c) **dass** das separate Dichtelement

       c1) auf die Ventilnadelspitze aufgeklebt ist, oder
       c2) in einer Fassung in der Ventilnadelspitze gehalten wird, oder

       c3) die Ventilnadelspitze auf einem Teil ihrer Länge umhüllt, und

    d) **dass** die Ventilnadel (30) und das Dichtelement aus unterschiedlichen Materialien bestehen, insbesondere aus Metall für die Ventilnadel und Kunststoff für das Dichtelement, und
    e) **dass** das Dichtelement an der Ventilnadelspitze befestigt ist durch:

       e1) Spritzgussverfahren,
       e2) Tauchen,
       e3) Aufschweißen,
       e4) Aufvulkanisieren.

11. Applikator nach einem der Ansprüche 5 oder 6, **dadurch gekennzeichnet,**

    a) **dass** mindestens eine der Aktornadeln (36) mehrere Düsen (38) verschließt oder freigibt, und/oder
    b) **dass** mindestens eine Aktornadel (36) zum Verschließen oder Öffnen mehrerer Düsen (38)

       b1) mit mehreren Ventilnadeln (37) verbunden ist, oder
       b2) mit einem Dichtelement (40) verbunden ist, das mehrere der Düsen (38) verschließt oder öffnet.

12. Applikator nach einem der vorhergehenden Ansprüche, **dadurch gekennzeichnet,**

    a) **dass** den einzelnen Düsen (2-4; 38; 45; 51) jeweils ein Ventilsitz mit einem separaten Dichtelement zugeordnet ist, und
    b) **dass** der Ventilsitz von einer Ventilnadelspitze wahlweise verschlossen oder freigegeben wird,
    c) **dass** das Dichtelement in dem Ventilsitz aus Metall oder Halbmetall besteht, und
    d) **dass** die Ventilnadelspitze aus Metall oder Halbmetall besteht, so dass die Ventilnadelspitze und das Dichtelement in dem Ventilsitz eine Materialpaarung Metall-Metall, Metall-Halbmetall, Halbmetall-Metall oder Halbmetall-Halbmetall bilden.

13. Applikator nach einem der Ansprüche 5 oder 6, **dadurch gekennzeichnet,**

    a) **dass** die Ventilnadel oder die Aktornadel durch eine Rückstellfeder beaufschlagt wird, und/oder
    b) **dass** die Rückstellfeder die Ventilnadel oder die Aktornadel in eine Öffnungsstellung oder in einer Schließstellung vorspannt.

**14.** Beschichtungsroboter, insbesondere Lackierroboter, mit einem Applikator nach einem der vorhergehenden Ansprüche.

**15.** Beschichtungsroboter nach Anspruch 14, **dadurch gekennzeichnet, dass** der Applikator durch eine Schnellwechselvorrichtung auswechselbar an dem Beschichtungsroboter befestigt ist, insbesondere mit einem Spannzapfen.

**Claims**

**1.** Applicator, in particular printhead, for applying a coating agent, in particular a paint, to a component, in particular to a motor vehicle body component, with

a) at least one nozzle row (46) having a plurality of nozzles (2-4; 38; 45; 51) for dispensing the coating agent in the form of a jet in each case, the nozzles (2-4; 38; 45; 51) being arranged along the nozzle row (46) and in a common nozzle plane, and
b) a plurality of actuators (9-11; 22; 35; 47; 53, 54; 56) for controlled releasing or closing of the nozzles (2-4; 38; 45; 51), each being connected to a slideable valve needle,
c) wherein the individual actuators (9-11; 22; 35; 47; 53, 54; 56) each have an outer dimension (b) along the nozzle row (46) which is greater than the nozzle distance (d) along the nozzle row (46), and
d) a housing,
**characterized in that**
e) the housing (24) consists of several housing parts,
f) the actuators (9-11; 22; 35; 47; 53, 54; 56) are provided half each in one of two housing parts, and
g) the valve needles (30) arranged in parallel are assigned to one of the two housing parts.

**2.** Applicator according to claim 1, **characterized in that**

a) the actuators (9-11) are arranged at different distances and/or orientations relative to the associated nozzle in order to enable the small nozzle distance (d) of the adjacent nozzles (2-4) along the nozzle row (46), and/or
b) the actuators (9-11) are arranged above one another at different vertical distances from the nozzle plane, and/or
c) the actuators (9-11) are arranged at different horizontal distances from one another relative to the nozzle row, and/or
d) the actuators (9-11) are arranged side by side at equal horizontal distances from the nozzle row.

**3.** Applicator according to one of the preceding claims, **characterized in that**

a) the actuators are arranged in a plurality of actuator planes, the individual actuator planes running parallel to the nozzle plane, and
b) two actuator rows are in each case arranged on either side of the nozzle row in the individual actuator planes, the actuator rows each containing a plurality of actuators.

**4.** Applicator according to feature b) of claim 2 and claim 3, **characterized in that**

a) the vertically adjacent actuator planes are offset from each other,
b) the offset between the vertically adjacent actuator planes essentially

b1) is equal to the nozzle distance (d) between the adjacent nozzles in the nozzle row, or
b2) is an integer multiple of the nozzle distance (d), and/or

c) the actuators in the actuator rows are arranged substantially equidistantly.

**5.** Applicator according to one of the preceding claims, **characterized in that**

a) the actuators each have a displaceable actuator needle,
b) the nozzles can each be released or closed by the sliding valve needle; and
c) the individual actuator needles are each connected to the associated valve needle by a mechanical connecting element, in particular by an arm or a pivotable one-sided or two-sided rocker arm.

**6.** Applicator according to one of claims 1 to 4, **characterized in that** the actuators each have a displaceable actuator needle, the actuator needle forming the valve needle which, depending on its position, releases or closes the associated nozzle.

**7.** Applicator in accordance with one of the preceding claims, **characterized in that**

a) the actuators are flushed with a fluid in order to dissipate the heat generated during operation,
b) the fluid is discharged through the interior of the housing, or
c) the fluid is discharged via the outside of the housing.

**8.** Applicator according to one of the preceding claims, **characterized in that** a plurality, in particular two, of actuators (53, 54) act jointly on a valve needle (48), namely via a common lifting beam (55), the two actuators (53, 54) acting externally on the lifting beam (55) and the valve needle (48) being driven by the lifting beam (55) in the centre of the lifting beam (55).

**9.** Applicator according to one of the preceding claims, **characterized in that**

a) the actuators (9-11) are connected to valve needles (12-14) of different lengths as a function of their distance from the nozzle plane, the actuators (9-11) which are further away from the nozzle plane being connected to a longer valve needle (12-14) than the actuators (9-11) which are closer to the nozzle plane, or
b) the actuators (9-11)

b1) irrespective of their distance from the nozzle plane, all are connected to valve needles (12-14) of substantially the same length and/or weight, and/or
b2) engage the valve needles (12-14) at engaging points at different distances from the nozzle plane.

**10.** Applicator according to claim 9, **characterized in that**

a) the valve needles (30) each have a valve needle tip which tapers conically towards its free end, and
b) the individual valve needles (30) each have a separate sealing element at their valve needle tip, and
c) the separate sealing element

c1) is glued to the tip of the valve needle, or
c2) is held in a socket in the valve needle tip; or
c3) wraps the tip of the valve needle over part of its length; and

d) the valve needle (30) and the sealing element are made of different materials, in particular metal for the valve needle and plastic for the sealing element, and
e) the sealing element is attached to the valve needle tip through:

e1) Injection moulding process,
e2) Dipping,
e3) Welding on,

e4) Vulcanizing.

**11.** Applicator according to one of claims 5 or 6, **characterized in that**

a) at least one of the actuator needles (36) closes or releases a plurality of nozzles (38), and/or
b) at least one actuator needle (36) for closing or opening a plurality of nozzles (38)

b1) is connected to a plurality of valve needles (37), or
b2) is connected to a sealing member (40) which closes or opens a plurality of said nozzles (38).

**12.** Applicator in accordance with one of the preceding claims, **characterized in that**

a) the individual nozzles (2-4; 38; 45; 51) are each assigned a valve seat with a separate sealing element, and
b) the valve seat is optionally closed or released by a valve needle tip,
c) the sealing element in the valve seat is made of metal or semi-metal; and
d) the valve needle tip is made of metal or semi-metal, so that the valve needle tip and the sealing element in the valve seat form a material pair metal-metal, metal-metalloid, semi-metalloid or semi-metalloid.

**13.** Applicator according to one of claims 5 or 6, **characterized in that**

a) the valve needle or the actuator needle is acted upon by a return spring, and/or
b) the return spring preloads the valve needle or the actuator needle in an open position or in a closed position.

**14.** Coating robot, in particular painting robot, with an applicator according to one of the preceding claims.

**15.** Coating robot according to claim 14, **characterized in that** the applicator is exchangeably fastened to the coating robot by a quick-change device, in particular with a clamping spigot.

**Revendications**

**1.** Applicateur, plus particulièrement tête d'impression, pour l'application d'un produit de revêtement, plus particulièrement d'une peinture, sur un composant, plus particulièrement sur un composant de carrosserie de véhicule automobile, avec

a) au moins une rangée de buses (46) avec plusieurs buses (2-4 ; 38 ; 45 ; 51) pour la distribution du produit de revêtement sous la forme respectivement d'un jet, dans lequel les buses (2-4 ; 38 ; 45 ; 51) sont disposées le long de la rangée de buses (46) et dans un plan de buse commun et

b) plusieurs actionneurs (9-11 ; 22 ; 35 ; 47 ; 53, 54 ; 56) reliés chacun avec un pointeau de soupape coulissant, pour la libération ou la fermeture contrôlée des buses (2-4 ; 38 ; 45 ; 51),

c) dans lequel les différents actionneurs (9-11 ; 22 ; 35 ; 47 ; 53, 54 ; 56) comprennent chacun une dimension externe (b) le long de la rangée de buses (46), qui est supérieure à la distance entre les buses (d) le long de la rangée de buses (46) et

d) un boîtier,

**caractérisé en ce que**

e) le boîtier (24) est constitué de plusieurs parties de boîtier,

f) les actionneurs (9-11 ; 22 ; 35 ; 47 ; 53, 54 ; 56) sont prévus respectivement pour moitié dans une des deux parties de boîtier et

g) les pointeaux de soupapes (30) disposés parallèlement correspondent à une des deux parties du boîtier.

2. Applicateur selon la revendication 1, **caractérisé en ce que**

   a) les actionneurs (9-11) sont disposés à différentes distance et/ou orientations par rapport à la buse correspondante afin de permettre une faible distance entre les buses (d) des buses adjacentes (2-4) le long de la rangée de buses (46= et/ou

   b) les actionneurs (9-11) sont disposés à différentes distances verticales par rapport à la rangée de buses, de manière superposée et/ou

   c) les actionneurs (9-11) sont à différentes distances horizontales par rapport à la rangée de buses, de manière juxtaposée et/ou

   d) les actionneurs (9-11) sont disposés à des distances horizontales égales par rapport à la rangée de buses, de manière juxtaposée.

3. Applicateur selon l'une des revendications précédentes, **caractérisé en ce que**

   a) les actionneurs sont disposés dans plusieurs plans d'actionneurs, dans lequel les différents plans d'actionneur s'étendent parallèlement au plan de buse et

   b) dans les différents plans d'actionneurs, sont disposées respectivement deux rangées d'actionneurs comprennent, des deux côtés de la rangée de buses, dans lequel les rangées d'actionneurs contiennent chacune plusieurs actionneurs.

4. Applicateur selon la caractéristique b) de la revendication 2 et de la revendication 3, **caractérisé en ce que**

   a) les plans d'actionneurs adjacents verticalement présentent un décalage l'un par rapport à l'autre,

   b) le décalage entre les plans d'actionneurs adjacents verticalement est globalement

   b1) égal à la distance entre les buses (d) entre les buses adjacentes dans la rangée de buses ou

   b2) est un multiple entier de la distance entre les buses (d) et/ou

   c) les actionneurs sont disposés de manière globalement équidistante dans les rangées d'actionneurs.

5. Applicateur selon l'une des revendications précédentes, **caractérisé en ce que**

   a) les actionneurs comprennent chacun un pointeau d'actionneur coulissant,

   b) les buses peuvent être libérées ou fermées respectivement par les pointeaux d'actionneurs coulissants et

   c) les différents pointeaux d'actionneurs sont reliés chacun par un élément de liaison mécanique avec le pointeau de soupape correspondant, plus particulièrement par un bras ou un levier basculant pivotant d'un seul côté ou des deux côtés.

6. Applicateur selon l'une des revendications 1 à 4, **caractérisé en ce que** les actionneurs comprennent chacun un pointeau d'actionneur coulissant, dans lequel le pointeau d'actionneur constitue le pointeau de soupape qui, en fonction de sa position, libère ou ferme la buse correspondante.

7. Applicateur selon l'une des revendications précédentes, **caractérisé en ce que**

   a) les actionneurs sont immergés dans un fluide afin d'évacuer la chaleur dégagée lors du fonctionnement,

   b) l'évacuation du fluide a lieu par l'intermédiaire de l'intérieur du boîtier ou

   c) l'évacuation du fluide a lieu par l'intermédiaire de l'extérieur du boîtier.

8. Applicateur selon l'une des revendications précédentes, **caractérisé en ce que** plusieurs, plus particulièrement deux, actionneurs (53, 54) agissent ensemble sur un pointeau de soupape (48), par l'intermédiaire d'une barre de levage commune (55), dans lequel les deux actionneurs (53, 54) agissent sur la barre de levage (55) et le pointeau de soupape (48) est entraîné par la barre de levage (55) au centre de la barre de levage (55).

**9.** Applicateur selon l'une des revendications précédentes, **caractérisé en ce que**

a) les actionneurs (9-11) sont reliés, en fonction de sa distance par rapport au plan de buse, avec des pointeaux de soupapes (12-14) de longueurs différentes, dans lequel les actionneurs (9-11) distants du plan de buse sont reliés avec un pointeau de soupape (12-14) plus long que les actionneurs (9-11) plus proches du plan de buse ou

b) les actionneurs (9-11)

b1) sont tous reliés, indépendamment de leur distance par rapport au plan de buse, avec des pointeaux de soupape (12-14) de même longueur et/ou de même poids et/ou

b2) s'emboîtent, au niveau de points d'emboîtement, à différentes distance du plan de buse, avec les pointeaux de soupapes (12-14).

**10.** Applicateur selon la revendication 9, **caractérisé en ce que**

a) les pointeaux de soupapes (30) comprennent chacun une pointe de pointeau de soupape qui se rétrécit de manière conique en direction de leur extrémité libre et

b) les différents pointeaux de soupapes (30) comprennent chacun, au niveau de leur pointe de pointeau de soupape, un élément d'étanchéité séparé et

c) l'élément d'étanchéité séparé

c1) est collé sur la pointe du pointeau de soupape ou

c2) est maintenu dans une monture dans la pointe du pointeau de soupape ou

c3) entoure la pointe du pointeau de soupape sur une partie de leur longueur et

d) le pointeau de soupape (30) et l'élément d'étanchéité sont constitués de différents matériaux, plus particulièrement de métal pour le pointeau de soupape et de matière plastique pour l'élément d'étanchéité et

e) l'élément d'étanchéité est fixé à la pointe du pointeau de soupape par :

e1) un procédé de moulage par injection,

e2) immersion,

e3) soudure,

e4) vulcanisation.

**11.** Applicateur selon l'une des revendications 5 ou 6, **caractérisé en ce que**

a) au moins un des pointeaux d'actionneurs (36) ferme ou libère plusieurs buses (38) et/ou

b) au moins un pointeau d'actionneur (36) pour la fermeture ou l'ouverture de plusieurs buses (38)

b1) est relié avec plusieurs pointeaux de soupapes (37) ou

b2) est relié avec un élément d'étanchéité (40) qui ferme ou ouvre plusieurs des buses (38).

**12.** Applicateur selon l'une des revendications précédentes, **caractérisé en ce que**

a) aux différentes buses (2-4 ; 38 ; 45 ; 51) correspond respectivement un siège de soupape avec un élément d'étanchéité séparé et

b) le siège de soupape est fermé ou libéré sélectivement par une pointe de pointeau de soupape,

c) l'élément d'étanchéité dans le siège de soupape est constitué de métal ou d'un semi-métal et

d) la pointe du pointeau de soupape est constitué d'un métal ou d'un semi-métal, de sorte que la pointe du pointeau de soupape et l'élément d'étanchéité du siège de soupape constituent une paire de matériaux métal - métal, métal - semi-métal, semi-métal - métal ou semi-métal - semi-métal.

**13.** Applicateur selon l'une des revendications 5 ou 6, **caractérisé en ce que**

a) le pointeau de soupape ou le pointeau d'actionneur est sollicité par un ressort de rappel et/ou

b) le ressort de rappel précontraint le pointeau de soupape ou le pointeau d'actionneur dans une position d'ouverture ou dans une position de fermeture.

**14.** Robot de revêtement, plus particulièrement robot de peinture, avec un applicateur selon l'une des revendications précédentes.

**15.** Robot de revêtement selon la revendication 14, **caractérisé en ce que** l'applicateur est fixé de manière interchangeable par un dispositif de changement rapide au robot de revêtement, plus particulièrement avec un tenon de serrage.

**Fig. 1**

Stand der Technik

**Fig. 2**

Stand der Technik

Fig. 3A

Stand der Technik

Fig. 4

9    10    11

12    13    14

## Fig. 3B
Stand der Technik

9    10

12    13

## Fig. 5

19  9  10  11

16  20  21
17  18

## Fig. 6

Fig. 7

Fig. 8

30

34

32

33

31

2

1

Fig. 9

35

36

37

38    39

Fig. 10

Fig. 11

Fig. 12

23   28

41

26

25

24

42

44

27   22

Fig. 13

47

45   46

Fig. 14

55

53    48    54

49

50    52

51

Fig. 15

53    54

55

48

49

50    52

51

Fig. 16

55

58    48    56

49

50    52

51

Fig. 17

FIG. 18A

FIG. 18B

67

60

59

Linke
Aktorreihe

61

Düsenreihe

Rechte
Aktorreihe

62

63

FIG. 19A

63

66

Aktorebene 3

Aktorebene 2

65

Aktorebene 1

64

FIG. 19B

Fig. 20

a.1.1

a.1.2

a.2.1

a.2.2

a.3.1

a.3.2

Fig. 21

68    69    70    71    73

## Fig. 22A

75

72    73

76

74

68

## Fig. 22B

Fig. 23

Fig. 24

Fig. 25

Fig. 26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9108424 B2
- WO 2012058373 A2
- DE 3302617 A1
- US 20130127955 A1
- EP 0426473 A2
- US 20050046673 A1
- EP 1862311 A1
- US 20150360472 A1
- US 4157149 A
- WO 2012072576 A1
- US 2296079 A
- DE 3506393 A1
- US 5800614 A
- EP 0276053 A1
- WO 2007056098 A2
- WO 2010046064 A1
- DE 3634137 A1